# EUROPEAN PATENT SPECIFICATION

(11) **EP 4 579 841 B1**
(45) Date of publication and mention of the grant of the patent: **30.09.2026**
(21) Application number: 24166139.6
(22) Date of filing: 26.03.2024
(51) Int. Cl.: H01M 10/0525, H01M 50/403, H01M 50/426, H01M 50/431, H01M 50/446

(54) **GEL POLYMER ELECTROLYTE SEPARATOR, AND PREPARATION METHOD AND USE THEREOF**
GELPOLYMERELEKTROLYTSEPARATOR UND HERSTELLUNGSVERFAHREN UND VERWENDUNG DAVON
SÉPARATEUR D'ÉLECTROLYTE POLYMÈRE EN GEL, SON PROCÉDÉ DE PRÉPARATION ET SON UTILISATION

(30) Priority: 29.12.2023 CN 202311852273
(43) Date of publication of application: 02.07.2025
(73) Proprietor: Yanshan Wanluda Technology Co., Ltd., Cangzhou, Hebei 061300 (CN)
(72) Inventor: ZHANG, Guofeng, Cangzhou, 061300 (CN); ZHANG, Guofu, Cangzhou, 061300 (CN); ZHANG, Guochong, Cangzhou, 061300 (CN)
(74) Representative: Schrell, Andreas

(56) References cited:
- CN-A- 1 715 327
- CN-A- 115 863 753
- CN-A- 116 960 575
- YANG SHI ET AL: "Nanohybrid electrolytes for high-energy lithium-ion batteries: recent advances and future challenges", NANOTECHNOLOGY, INSTITUTE OF PHYSICS PUBLISHING, BRISTOL, GB, vol. 30, no. 30, 1 May 2019 (2019-05-01), pages 302002, XP020341571, ISSN: 0957-4484, [retrieved on 20190501], DOI: 10.1088/1361-6528/AB0FB2

## Description

### TECHNICAL FIELD

The disclosure relates to the technical field of lithium-ion batteries, and in particular to a gel polymer electrolyte separator, and a preparation method and use thereof.

### BACKGROUND

With the continuous development of the global economy and the continuous improvement of people's living standards, energy and environmental issues have become increasingly prominent. As a carrier of energy storage, secondary lithium-ion batteries have been widely used in many fields such as mobile phones, digital portable products, and electric vehicles due to high energy density, long cycle life, small self-discharge effect, and environmental friendliness. As an important component of lithium-ion batteries, electrolytes play an important role in transmitting lithium ions in the battery. However, the electrolyte of commercial lithium-ion batteries currently generally adopts highly-flammable carbonate organic solvents, which have risks of leakage and combustion that may lead to huge safety hazards in lithium-ion batteries. For example, accidents such as mobile phones and electric vehicles burning and catching fire occur frequently. In order to avoid leakage of the electrolyte, a gel polymer electrolyte has been developed by researchers.

The gel polymer electrolyte is a novel functional polymer material between all-solid polymer electrolytes and liquid electrolytes, has stable electrochemical properties, and could be used for lithium-ion batteries in the form of separators and electrolyte materials. However, existing gel polymer electrolytes have a poor room-temperature conductivity. In order to improve the room-temperature conductivity, inorganic fillers are added into the gel polymer electrolyte to form a composite electrolyte system. The inorganic fillers could be divided into two categories: inert fillers and active fillers. Common inert fillers include Al₂O₃, SiO₂, or TiO₂, which do not directly participate in the ion transport but increase the number of free Li⁺ as well as promote the rapid transport of Li⁺, thereby improving ionic conductivity. The active fillers refer to inorganic solid electrolytes (divided into oxides and sulfides), which could directly participate in ion transport and provide a lithium source, thereby further improving the ionic conductivity. However, existing gel polymer electrolyte separators have some defects, mainly including the difficulty in balancing mechanical strength and electrochemical performance. That is, if the electrochemical performance is improved, the mechanical strength will decrease, and if the mechanical performance is improved, the electrochemical performance will decrease.

The Bellcore film-making method is a film-making process that uses polyvinylidene fluoride (PVDF) as a film-forming substance and dibutyl phthalate (DBP) as a pore-forming agent. After a film is formed, the DBP is extracted from the film by using a volatile organic solvent, thereby forming nanometer-sized pores in the film. This process is commercialized earlier. However, the polymer film obtained by this process has low mechanical properties and poor processability, thus limiting its popularization and application. An inorganic powder could be added to the polymer electrolyte to allow modification to simultaneously increase the ionic conductivity and mechanical properties of a polymer electrolyte film. Therefore, inorganic powder-compounded polymer electrolytes have received widespread attention in the early stages. However, the requirements for product performance continue to increase with the development of times, such that the tensile strength and elongation of products obtained by using the inorganic powder-modified polymer electrolytes still cannot be put into commercial use due to the inability in meeting requirements of cell winding process and the ionic conductivity index of lithium-ion batteries.

In the paper ("Study of Nano-silica Reinforced PVDF Polymer Microporous Films", SUN Zhineng, Fine Chemicals, Vol. 2, 2008, pp. 10-14, DOI: 10.1007/s11670-008-0115-z), a polyvinylidene fluoride/silica (PVDF/SiO₂) composite microporous film is prepared by a solution blending process with using PVDF as a film-forming substance, nano-silica as a filler, and acetone and N,N,-dimethylformamide (DMF) as a mixed solvent. The composite microporous film has a maximum tensile strength of 6.36 MPa and an elongation at break of 106.17. In the paper, it shows that although the electrochemical performance could be improved by adding an inorganic powder into a polymer electrolyte, there are still poor tensile strength and ductility of the polymer electrolyte.

Chinese Patent CN 101104722 A discloses "Method for preparing nano-silica/polymethyl methacrylate gel polymer electrolyte by initiating polymerization in one step". In this patent, although the obtained electrolyte has an ideal mechanical strength, there is still an unsatisfactory ionic conductivity with a maximum of only 3.44×10⁻⁴ S·cm⁻¹. Chinese Patent CN 115863753 A discloses a gel electrolyte separator, and a preparation method and use thereof, which also shows a defect that the mechanical strength and electrochemical performance cannot be balanced.

Chinese Patent CN 116960575 A discloses a high-strength gel electrolyte separator, a preparation method and use thereof. Raw materials for preparing the high-strength gel electrolyte separator include a masterbatch and an extractant, where the masterbatch includes a polymer substrate, a pore-forming agent, an organic solvent, and nano-functional materials. The gel electrolyte separator exhibits high mechanical strength and electrochemical performance, and can be used to prepare an electrolyte system with high mechanical strength and high conductivity at both room temperature and low temperature.

### SUMMARY

In view of this, the present disclosure provides a gel polymer electrolyte separator and a preparation method and use thereof. The gel polymer electrolyte separator according to the present disclosure exhibits high mechanical strength and electrochemical properties, and could be used to prepare an electrolyte system with high mechanical strength as well as conductivity in both high ambient temperature and low ambient temperature environments.

In order to achieve the above-mentioned object, the present disclosure provides the following technical solutions:
A first object of the present disclosure is to provide a gel polymer electrolyte separator, which is prepared from raw materials, including a masterbatch and an extractant; wherein
the masterbatch includes the following components in mass percentage, based on a mass of the gel polymer electrolyte: 53% to 81% of an organic solvent, 10% to 21% of a polymer substrate, 6% to 19% of a pore-forming agent, and 1% to 8% of a nano-functional material;
the polymer substrate is one or two selected from the group consisting of a polyvinylidene fluoride (PVDF) homopolymer and a PVDF-hexafluoropropylene (HFP) copolymer;
the nano-functional material is one or more selected from the group consisting of Al₂O₃, SiO₂, TiO₂, and an oxide solid electrolyte;
the extractant is one or more selected from the group consisting of methanol, dichloromethane (DCM), ethanol, chloroform, trichloromethane (TCM), dichloroethane, carbon tetrachloride (CTC), toluene, and ethyl acetate;
the pore-forming agent is dibutyl phthalate (DBP) and white oil; and
in the pore-forming agent, based on a total mass of the organic solvent and the polymer substrate, a mass fraction of the DBP is in a range of 7% to 18%, and a mass fraction of the white oil is in a range of 1% to 2%.

In some embodiments, the oxide solid electrolyte is one or more selected from the group consisting of LLZO, LLZTO, LLTO, NASICON, LAGP, and LATP.

In some embodiments, the organic solvent is one or more selected from the group consisting of acetone, N,N-dimethylformamide (DMF), N-methylpyrrolidone (NMP), and *N,N-*dimethylacetamide (DMAC).

A second object of the present disclosure is to provide a method for preparing the gel polymer electrolyte separator described above, including the following steps:
(1) dissolving the nano-functional material, the polymer substrate, and the pore-forming agent in the organic solvent to obtain a gel liquid; and
(2) forming the gel liquid into a film, and immersing the film in the extractant and performing extraction to obtain the gel polymer electrolyte separator.

In some embodiments, the method further comprises in step (1), subjecting the pore-forming agent to filtration and iron removal in sequence before the dissolving.

In some embodiments, the method further comprises in step (2), after the extraction, subjecting a resulting extracted film material to drying and molding to obtain the gel polymer electrolyte separator.

In some embodiments, the drying is conducted at a temperature of 20 °C to 100 °C.

In some embodiments, the method for preparing the gel polymer electrolyte separator includes the following steps:
(1) subjecting the pore-forming agent, the organic solvent, and the nano-functional material separately to magnetic filtration and conventional foreign matter filtration for later use;
(2) adding a resulting organic solvent and nano-functional material obtained after filtration in step (1) into a double planetary mixing stirrer to obtain a mixture, subjecting the mixture to pre-mixing, and grinding a resulting system into a dispersion in a sand mill, and then, making the dispersion return into the double planetary mixing stirrer and the sand mill in sequence, and repeating the foregoing operations at a temperature of 10 °C to 40 °C for greater than or equal to 60 min; where the pre-mixing is performed at a stirring speed of 30 r/min to 500 r/min and a shearing wheel speed of 1,000 r/min to 4,000 r/min; and the grinding is performed at a sand mill speed of 500 r/min to 4,000 r/min; and then, subjecting the dispersion to magnetic filtration and conventional foreign matter filtration to obtain a filtered dispersion;
(3) adding the polymer substrate into the filtered dispersion obtained in step (2), heating a resulting system to a temperature of 50 °C to 70 °C under a stirring speed of 30 r/min to 500 r/min and a shearing wheel speed of 1,000 r/min to 4,000 r/min for 60 min to 300 min to obtain a gel liquid;
(4) adding the pore-forming agent treated in step (1) into the gel liquid obtained in step (3), and preparing a resulting system into a finished gel liquid at a temperature of 20 °C to 70 °C under a stirring speed of 30 r/min to 500 r/min and a shearing wheel speed of 1,000 r/min to 4,000 r/min for 10 min to 300 min, and subjecting the finished gel liquid to magnetic filtration and conventional foreign matter filtration to obtain a filtered finished gel liquid;
(5) subjecting the filtered finished gel liquid obtained in step (4) to ultrasonic defoaming, pouring a resulting defoamed gel liquid into a slit grinding tool at a temperature of 20 °C to 70 °C through a metering pump, extruding the defoamed gel liquid onto a carrier at a temperature of 20 °C to 80 °C and performing casting, and then blast drying a resulting system at a temperature of 20 °C to 80 °C to obtain a translucent gel polymer electrolyte separator;
(6) subjecting the translucent gel polymer electrolyte separator obtained in step (5) to temperature-controlled hot press molding at a temperature of 20 °C to 80 °C with a roller pressure of 0.1 MPa to 5 MPa to obtain a hot press molded gel polymer electrolyte separator;
(7) adding the hot press molded gel polymer electrolyte separator obtained in step (6) into the extractant, and performing extraction at a temperature of 10 °C to 30 °C more than or equal to 2 times to obtain an extracted gel polymer electrolyte separator;
(8) subjecting the extracted gel polymer electrolyte separator obtained in step (7) to blast drying and stretch molding at a temperature of 20 °C to 100 °C to obtain a stretch molded gel polymer electrolyte separator;
(9) subjecting the stretch molded gel polymer electrolyte separator obtained in step (8) to hot press molding with a hot roller temperature of 20 °C to 100 °C and a roller pressure of 0.1 MPa to 5 MPa to obtain a white gel polymer electrolyte separator; and
(10) rolling-up the white gel polymer electrolyte separator obtained in step (9) to obtain the gel polymer electrolyte separator with a thickness of 8 µm to 30 µm.

A third object of the present disclosure is to provide use of the gel polymer electrolyte separator described above in lithium ion batteries.

The gel polymer electrolyte separator prepared in the present disclosure is made into a lithium battery, where an electrolyte is injected, and a positive electrode sheet and a negative electrode sheet are wet-pressed and bonded. Alternatively, a battery core is dry-pressed and packaged, the positive electrode sheet and the negative electrode sheet are dry-pressed and bonded, and then the electrolyte is injected. A close contact between the gel polymer electrolyte separator and the electrode sheet is beneficial to reducing an interface resistance of the lithium battery. Nano-functional materials such as Al₂O₃, SiO₂, TiO₂, LLZO, LLZTO, LLTO, NASICON, LAGP, and LATP could reduce crystallinity of polymers, provide free transmission channels for lithium ions, reduce resistance, and improve ionic conductivity. A reason for achieving the above effects is that high polymers have a high degree of crystallinity, molecular bonds are tightly arranged in an orderly manner, and the crystallinity is increased. However, the increase in crystallinity is not conducive to ion conduction. In the present disclosure, the orderly arrangement of polymer molecular bonds is broken through the introduction of nano-functional materials, thereby reducing the crystallinity. The reduction in crystallinity could adsorb more electrolyte, thereby promoting the migration of polymer chain segments and increasing the ionic conductivity. In addition, oxide solid electrolytes directly participate in ion transport and provide lithium sources, thereby further improving the ionic conductivity. In an assembled button-type stainless steel symmetrical battery, the gel polymer electrolyte separator has a thickness of 15 µm, and an area of 2.0096 square centimeters, a self-prepared electrolyte of 1 M LiPF₆ in EC: DMC=3:7 (v/v) is used, and the assembled button-type stainless steel symmetrical battery has a manufacturing pressure of 5 MPa per square centimeter. After measurment, the assembled button-type stainless steel symmetrical battery has an ionic conductivity of 5.7*10⁻⁴ mS/cm⁻¹, and an ion migration number of 0.67. It is worth noting that the ionic conductivity and ion migration number are closely related to the electrolyte formula and pressure.

Chinese Patent CN 115863753 A also discloses a gel electrolyte separator, and a preparation method and use thereof. The above patent differs from the present disclosure in that the gel polymer electrolyte swells after absorbing the electrolyte, and a resulting swollen gel electrolyte goes through a heating and pressurizing process during the lithium battery manufacturing. After the heating and pressurizing, the gel electrolyte is affected by external conditions, causing changes to the lithium ion transmission channel. Blockage of ion transport channels leads to a poor ionic conductivity. The nano-materials Al₂O₃, SiO₂, and TiO₂ do not swell themselves and could provide a larger specific surface area and increase ion transmission channels. Oxide solid electrolytes LLZO, LLTO, LLZTO, NASICON, LAGP, and LATP could not only provide a larger specific surface area, but also directly participate in ion transmission to provide lithium sources, thereby further improving the ionic conductivity.

Compared with the existing technology, the present disclosure has the following beneficial effects: the gel polymer electrolyte separator according to the present disclosure could not only solve the safety risks caused by easy leakage of traditional organic electrolytes, but also overcome the shortcomings of low ionic conductivity and high interface resistance of all-solid electrolytes. The added nano-functional materials Al₂O₃, SiO₂, TiO₂, LLZO, LLZTO, LLTO, NASICON, LAGP, and LATP could promote the rapid transport of Li⁺, thereby increasing the ionic conductivity. Owing to the introduction of nano-functional materials, the dosage of pore-forming agent is reduced to ensure the mechanical strength of the gel polymer electrolyte, which is easy to cause a problem that one side of the separator has pores while the other side is non-porous during the manufacturing. However, in the present disclosure, by introducing a mixed pore-forming agent of white oil and DBP, the ion transmission problem that one side of the gel polymer electrolyte separator has pores while the other side is non-porous could be effectively solved, interface resistance could be reduced, and ionic conductivity could be increased.

### BRIEF DESCRIPTION OF THE DRAWINGS

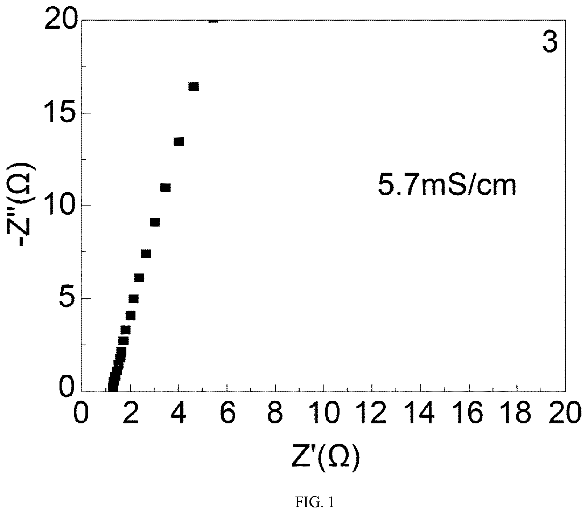

FIG. 1 shows an alternating current (AC) impedance of the gel polymer electrolyte prepared in Example 3 of the present disclosure, where the separator prepared in Example 1 can be calculated to have a conductivity of 5.7×10⁻⁴ S/cm⁻¹ through the AC impedance.

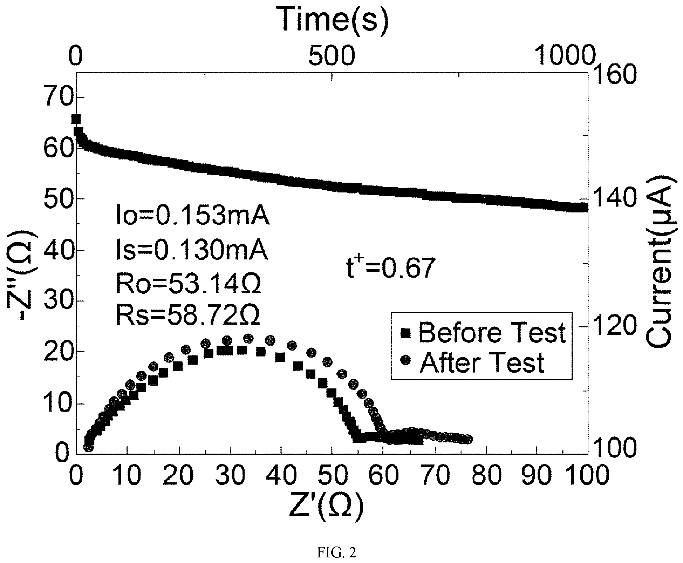

FIG. 2 shows the calculation of an ion migration number of the gel polymer electrolyte prepared in Example 3 of the present disclosure:
   in which, a lithium symmetrical battery is assembled, the impedance before polarization is determined, a steady-state current is determined by chronoamperometry method at frequency: 100 KHz to 10 MHz, ΔV=10 mV, time=1,000 s, and then the impedance after polarization is determined; the ion migration number is calculated with a formula t^+ = Is(Δv-I0R0)/I0(Δv-ISRS), where t^+ represents the ion migration number, Is represents the steady-state current, I0 represents an initial current, Rs represents the impedance after polarization, and R0 represents the impedance before polarization; a measured ion migration number is: 0.67.

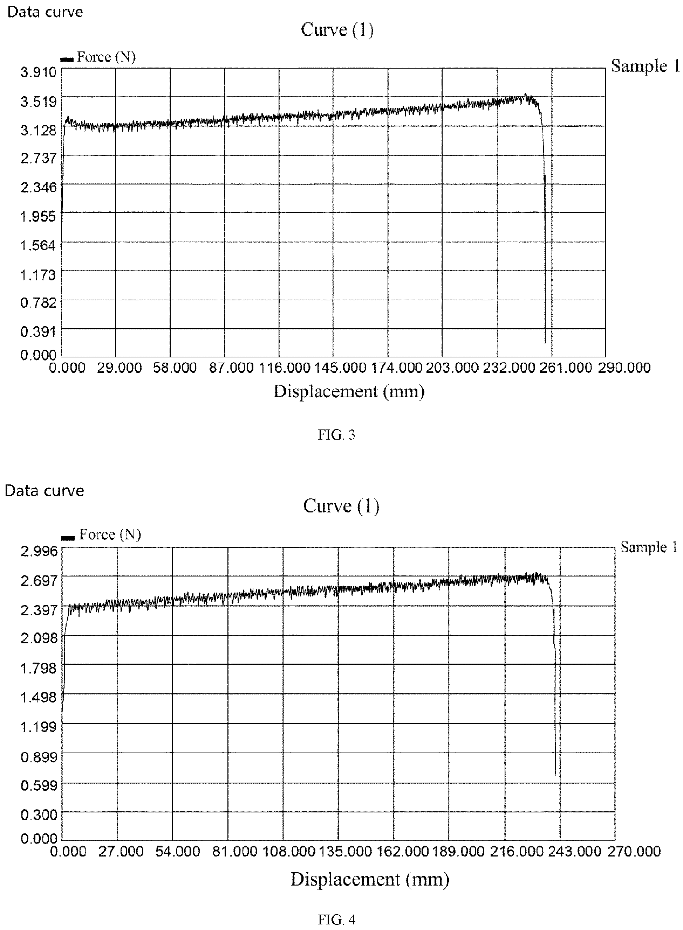

FIG. 3 shows a tensile performance curve in an MD direction of the gel polymer electrolyte prepared in Example 3 of the present disclosure.
FIG. 4 shows a tensile performance curve in a TD direction of the gel polymer electrolyte prepared in Example 3 of the present disclosure.

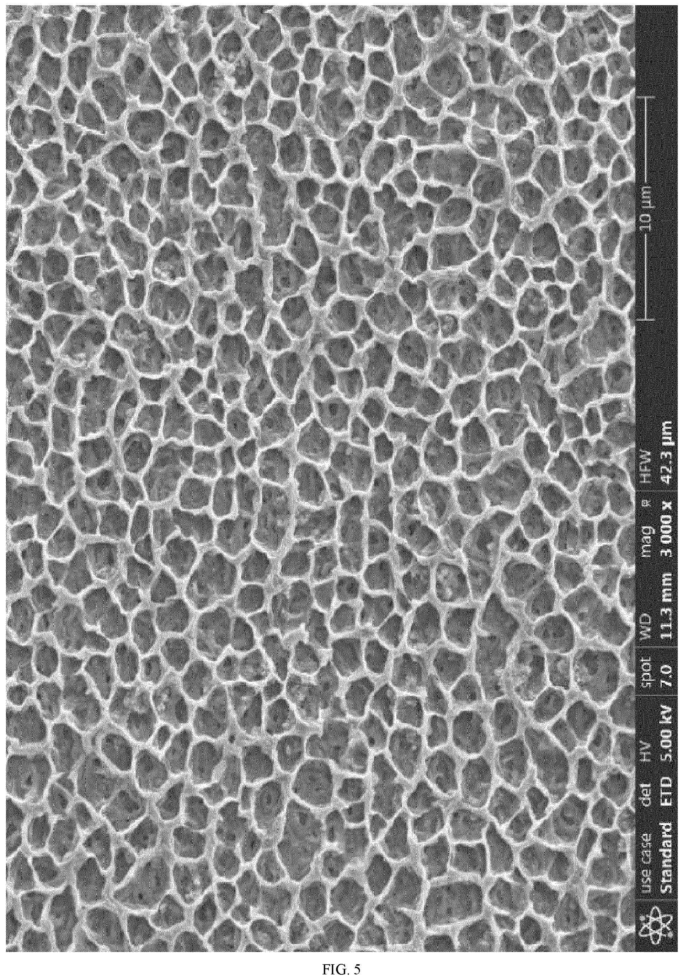

FIG. 5 shows a scanning electron microscopy (SEM) image of a side A of the gel polymer electrolyte prepared in Example 3 of the present disclosure, where a side B is the side where the gel liquid contacts a carrier during the film-forming, while the side A is the other side.

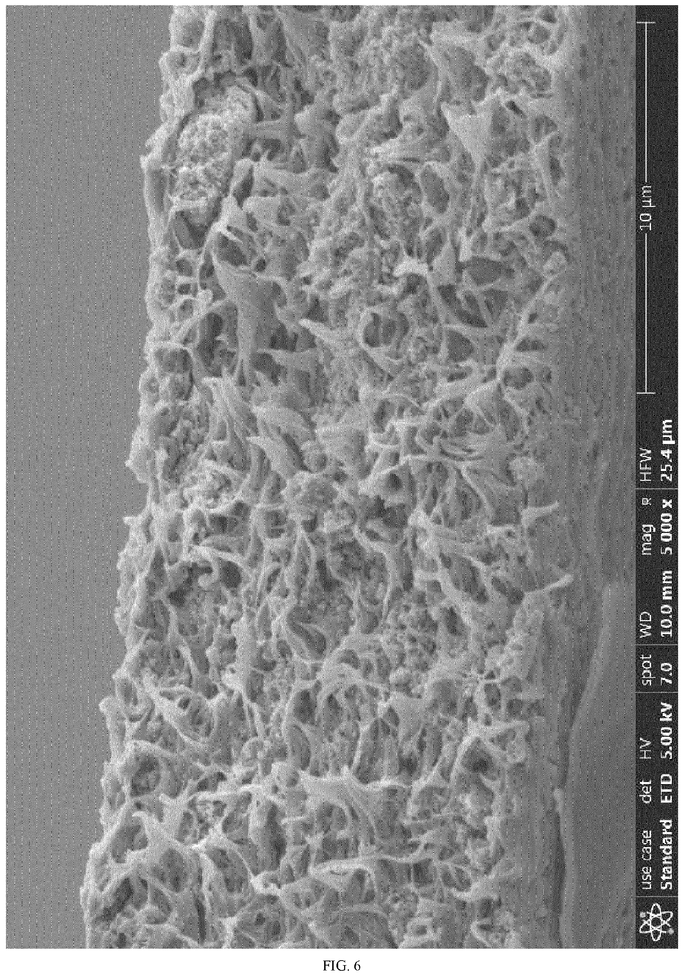

FIG. 6 shows an SEM image of a cross-section of the gel polymer electrolyte prepared in Example 3 of the present disclosure.

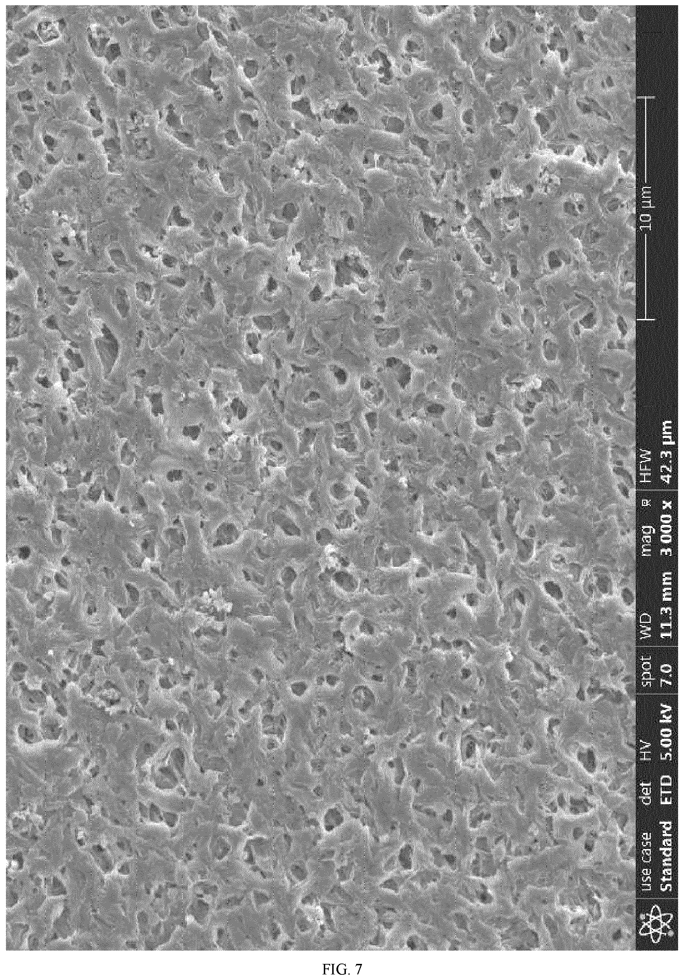

FIG. 7 shows an SEM image of a side B of the gel polymer electrolyte prepared in Example 3 of the present disclosure, where the side B is the side where the gel liquid contacts a carrier during the film-forming, while a side A is the other side.

### DETAILED DESCRIPTION OF THE EMBODIMENTS

In order to make the objects, technical solutions and advantages of the present disclosure clearer, the technical solutions of the present disclosure will be described clearly and completely below. Apparently, the described examples are merely some rather than all of the embodiments of the present disclosure. All other examples obtained by those skilled in the art based on the examples of the present disclosure without creative efforts should fall within the scope of the present disclosure.

The experimental methods and test methods described in the following examples are conventional methods, unless otherwise specified. The raw materials and additives could be obtained from conventional commercial sources or prepared by conventional methods, unless otherwise specified.

### Example 1

A gel polymer electrolyte separator was prepared by the following steps:
(1) a pore-forming agent of white oil and DBP, an organic solvent acetone, and a nano-functional material TiO₂ were separately subjected to magnetic filtration and conventional foreign matter filtration for later use;
(2) 5 kg of a resulting acetone after filtration and 0.32 kg of a resulting TiO₂ after filtration were placed in a double planetary mixing stirrer, and pre-stirred for dispersing with a stirring speed of 66 r/min and a shearing wheel speed of 4,000 r/min at 22 °C for 5 min. Then, a resulting system was injected into a sand mill with a stirring speed of 1,500 r/min at 22 °C to obtain a dispersion. Then, the dispersion was returned into the double planetary mixing stirrer and the sand mill in sequence, and repeated the foregoing operations for 60 min until the TiO₂ was evenly dispersed in the acetone. Then, the dispersion was subjected to magnetic filtration and conventional foreign matter filtration again to obtain a filtered dispersion;
(3) 1.25 kg of a polymer substrate PVDF-HFP copolymer was added into the filtered dispersion obtained in step (2), a resulting system was heated to 50 °C, and stirred at a stirring speed of 66 r/min and a shearing wheel speed of 4,000 r/min for 90 min to obtain a gel liquid;
(4) the pore-forming agent treated in step (1) (white oil 0.16 kg and DBP 0.84 kg) was added into the gel liquid obtained in step (3), and stirred in the double planetary mixing stirrer at 50 °C with a stirring speed of 66 r/min and a shearing wheel speed of/min to 4,000 r/min for 66 min to obtain a finished gel liquid; then, the finished gel liquid was subjected to magnetic filtration and conventional foreign matter filtration to obtain a filtered finished gel liquid;
(5) the filtered finished gel liquid obtained in step (4) was subjected to ultrasonic defoaming, a resulting defoamed gel liquid was poured into a slit grinding tool at 50 °C through a metering pump; then, the defoamed gel liquid was extruded onto a carrier at 30 °C with a linear speed of 4.5 m/min and cast, and then blast dried at 70 °C with a blast frequency of 25 Hz and an exhaust frequency of 30 Hz to obtain a translucent gel polymer electrolyte separator;
(6) the translucent gel polymer electrolyte separator obtained in step (5) was subjected to temperature-controlled hot press molding at 50 °C with a roller pressure of 1 MPa to obtain a hot press molded gel polymer electrolyte separator;
(7) the hot press molded gel polymer electrolyte separator obtained in step (6) was placed into an extractant DCM, and subjected to extraction at 20 °C 4 times to obtain an extracted gel polymer electrolyte separator;
(8) the extracted gel polymer electrolyte separator obtained in step (7) was subjected to blast drying and stretch molding at 70 °C with a blast frequency of 25 Hz and an exhaust frequency of 30 Hz to obtain a stretch molded gel polymer electrolyte separator;
(9) the stretch molded gel polymer electrolyte separator obtained in step (8) was subjected to hot press molding with a hot roller temperature of 70°C and a hot roller pressure of 3 MPa to obtain a white gel polymer electrolyte separator; and
(10) the white gel polymer electrolyte separator obtained in step (9) was rolled-up to obtain the gel polymer electrolyte separator with a thickness of 15 µm.

### Example 2

A gel polymer electrolyte separator was prepared by the following steps:
(1) a pore-forming agent of white oil and DBP, an organic solvent acetone, and a nano-functional material LATP were separately subjected to magnetic filtration and conventional foreign matter filtration for later use;
(2) 5 kg of a resulting acetone after filtration and 0.32 kg of a resulting LATP after filtration were placed in a double planetary mixing stirrer, and pre-stirred for dispersing with a stirring speed of 66 r/min and a shearing wheel speed of 4,000 r/min at 22 °C for 5 min. Then, a resulting system was injected into a sand mill with a stirring speed of 1,500 r/min at 22 °C to obtain a dispersion. Then, the dispersion was returned into the double planetary mixing stirrer and the sand mill in sequence, and repeated the foregoing operations for 60 min until the LATP was evenly dispersed in the acetone. Then, the dispersion was subjected to magnetic filtration and conventional foreign matter filtration again to obtain a filtered dispersion;
(3) 1.25 kg of a polymer substrate PVDF-HFP copolymer was added into the filtered dispersion obtained in step (2), a resulting system was heated to 50 °C, and stirred at a stirring speed of 66 r/min and a shearing wheel speed of 4,000 r/min for 90 min to obtain a gel liquid;
(4) the pore-forming agent treated in step (1) (white oil 0.16 kg and DBP 0.84 kg) was added into the gel liquid obtained in step (3), and stirred in the double planetary mixing stirrer at 50 °C with a stirring speed of 66 r/min and a shearing wheel speed of/min to 4,000 r/min for 66 min to obtain a finished gel liquid; then, the finished gel liquid was subjected to magnetic filtration and conventional foreign matter filtration to obtain a filtered finished gel liquid;
(5) the filtered finished gel liquid obtained in step (4) was subjected to ultrasonic defoaming, a resulting defoamed gel liquid was poured into a slit grinding tool at 50 °C through a metering pump; then, the defoamed gel liquid was extruded onto a carrier at 30 °C with a linear speed of 4.5 m/min and cast, and then blast dried at 70 °C with a blast frequency of 25 Hz and an exhaust frequency of 30 Hz to obtain a translucent gel polymer electrolyte separator;
(6) the translucent gel polymer electrolyte separator obtained in step (5) was subjected to temperature-controlled hot press molding at 50 °C with a roller pressure of 1 MPa to obtain a hot press molded gel polymer electrolyte separator;
(7) the hot press molded gel polymer electrolyte separator obtained in step (6) was placed into an extractant DCM, and subjected to extraction at 20 °C 4 times to obtain an extracted gel polymer electrolyte separator;
(8) the extracted gel polymer electrolyte separator obtained in step (7) was subjected to blast drying and stretch molding at 70 °C with a blast frequency of 25 Hz and an exhaust frequency of 30 Hz to obtain a stretch molded gel polymer electrolyte separator;
(9) the stretch molded gel polymer electrolyte separator obtained in step (8) was subjected to hot press molding with a hot roller temperature of 70°C and a hot roller pressure of 3 MPa to obtain a white gel polymer electrolyte separator; and
(10) the white gel polymer electrolyte separator obtained in step (9) was rolled-up to obtain the gel polymer electrolyte separator with a thickness of 15 µm.

### Example 3

A gel polymer electrolyte separator was prepared by the following steps:
(1) a pore-forming agent of white oil and DBP, an organic solvent acetone, and a nano-functional material LATP were separately subjected to magnetic filtration and conventional foreign matter filtration for later use;
(2) 6 kg of a resulting acetone after filtration and 0.23 kg of a resulting LATP after filtration were placed in a double planetary mixing stirrer, and pre-stirred for dispersing with a stirring speed of 66 r/min and a shearing wheel speed of 4,000 r/min at 22 °C for 5 min. Then, a resulting system was injected into a sand mill with a stirring speed of 1,500 r/min at 22 °C to obtain a dispersion. Then, the dispersion was returned into the double planetary mixing stirrer and the sand mill in sequence, and repeated the foregoing operations for 60 min until the LATP was evenly dispersed in the acetone. Then, the dispersion was subjected to magnetic filtration and conventional foreign matter filtration again to obtain a filtered dispersion;
(3) 1.3 kg of a polymer substrate PVDF-HFP copolymer was added into the filtered dispersion obtained in step (2), a resulting system was heated to 50 °C, and stirred at a stirring speed of 66 r/min and a shearing wheel speed of 4,000 r/min for 90 min to obtain a gel liquid;
(4) the pore-forming agent treated in step (1) (white oil 0.15 kg and DBP 0.825 kg) was added into the gel liquid obtained in step (3), and stirred in the double planetary mixing stirrer at 50 °C with a stirring speed of 66 r/min and a shearing wheel speed of/min to 4,000 r/min for 60 min to obtain a finished gel liquid; then, the finished gel liquid was subjected to magnetic filtration and conventional foreign matter filtration to obtain a filtered finished gel liquid;
(5) the filtered finished gel liquid obtained in step (4) was subjected to ultrasonic defoaming, a resulting defoamed gel liquid was poured into a slit grinding tool at 50 °C through a metering pump; then, the defoamed gel liquid was extruded onto a carrier at 30 °C with a linear speed of 4.5 m/min and cast, and then blast dried at 70 °C with a blast frequency of 25 Hz and an exhaust frequency of 30 Hz to obtain a translucent gel polymer electrolyte separator;
(6) the translucent gel polymer electrolyte separator obtained in step (5) was subjected to temperature-controlled hot press molding at 50 °C with a roller pressure of 1 MPa to obtain a hot press molded gel polymer electrolyte separator;
(7) the hot press molded gel polymer electrolyte separator obtained in step (6) was placed into an extractant DCM, and subjected to extraction at 20 °C 4 times to obtain an extracted gel polymer electrolyte separator;
(8) the extracted gel polymer electrolyte separator obtained in step (7) was subjected to blast drying and stretch molding at 70 °C with a blast frequency of 25 Hz and an exhaust frequency of 30 Hz to obtain a stretch molded gel polymer electrolyte separator;
(9) the stretch molded gel polymer electrolyte separator obtained in step (8) was subjected to hot press molding with a hot roller temperature of 70°C and a hot roller pressure of 3 MPa to obtain a white gel polymer electrolyte separator; and
(10) the white gel polymer electrolyte separator obtained in step (9) was rolled-up to obtain the gel polymer electrolyte separator with a thickness of 15 µm.

| Example | Gram weight | Thickness | Heat shrinkage | | | | | | Stretch kgf/cm | | Elongation % | |
|---|---|---|---|---|---|---|---|---|---|---|---|---|
| | | (µm) | Before shrinkage 150 °C | | After shrinkage 150 °C | | Shrinkage percentage | Shrinkage percentage | Test value | | Test value | |
| | Test value | Test value | TD | MD | TD | MD | TD | MD | TD | MD | TD | MD |
| 3 | 18.3 | 15 | 100 | 100 | 95 | 91.3 | 5.0% | 8.7% | 130 | 170 | 240 | 257 |
| | | | 100 | 100 | 94 | 90.2 | 6.0% | 9.8% | 141 | 174 | 252 | 286 |
| | | | 100 | 100 | 94.5 | 90.3 | 5.5% | 9.7% | 127 | 165 | 234 | 237 |

### Example 4

A gel polymer electrolyte separator was prepared by the following steps:
(1) a pore-forming agent of white oil and DBP, an organic solvent acetone, and a nano-functional material Al₂O₃ were separately subjected to magnetic filtration and conventional foreign matter filtration for later use;
(2) 6 kg of a resulting acetone after filtration and 0.23 kg of a resulting Al₂O₃ after filtration were placed in a double planetary mixing stirrer, and pre-stirred for dispersing with a stirring speed of 66 r/min and a shearing wheel speed of 4,000 r/min at 22 °C for 5 min. Then, a resulting system was injected into a sand mill with a stirring speed of 1,500 r/min at 22 °C to obtain a dispersion. Then, the dispersion was returned into the double planetary mixing stirrer and the sand mill in sequence, and repeated the foregoing operations for 60 min until the Al₂O₃ was evenly dispersed in the acetone. Then, the dispersion was subjected to magnetic filtration and conventional foreign matter filtration again to obtain a filtered dispersion;
(3) 1.3 kg of a polymer substrate PVDF-HFP copolymer was added into the filtered dispersion obtained in step (2), a resulting system was heated to 50 °C, and stirred at a stirring speed of 66 r/min and a shearing wheel speed of 4,000 r/min for 90 min to obtain a gel liquid;
(4) the pore-forming agent treated in step (1) (white oil 0.15 kg and DBP 0.825 kg) was added into the gel liquid obtained in step (3), and stirred in the double planetary mixing stirrer at 50 °C with a stirring speed of 66 r/min and a shearing wheel speed of/min to 4,000 r/min for 60 min to obtain a finished gel liquid; then, the finished gel liquid was subjected to magnetic filtration and conventional foreign matter filtration to obtain a filtered finished gel liquid;
(5) the filtered finished gel liquid obtained in step (4) was subjected to ultrasonic defoaming, a resulting defoamed gel liquid was poured into a slit grinding tool at 50 °C through a metering pump; then, the defoamed gel liquid was extruded onto a carrier at 30 °C with a linear speed of 4.5 m/min and cast, and then blast dried at 70 °C with a blast frequency of 25 Hz and an exhaust frequency of 30 Hz to obtain a translucent gel polymer electrolyte separator;
(6) the translucent gel polymer electrolyte separator obtained in step (5) was subjected to temperature-controlled hot press molding at 50 °C with a roller pressure of 1 MPa to obtain a hot press molded gel polymer electrolyte separator;
(7) the hot press molded gel polymer electrolyte separator obtained in step (6) was placed into an extractant DCM, and subjected to extraction at 20 °C 4 times to obtain an extracted gel polymer electrolyte separator;
(8) the extracted gel polymer electrolyte separator obtained in step (7) was subjected to blast drying and stretch molding at 70 °C with a blast frequency of 25 Hz and an exhaust frequency of 30 Hz to obtain a stretch molded gel polymer electrolyte separator;
(9) the stretch molded gel polymer electrolyte separator obtained in step (8) was subjected to hot press molding with a hot roller temperature of 70°C and a hot roller pressure of 3 MPa to obtain a white gel polymer electrolyte separator; and
(10) the white gel polymer electrolyte separator obtained in step (9) was rolled-up to obtain the gel polymer electrolyte separator with a thickness of 15 µm.

## Claims

1. A gel polymer electrolyte separator, which is prepared from raw materials comprising a masterbatch and an extractant; wherein
the masterbatch comprises the following components in mass percentage, based on a mass of the gel polymer electrolyte: 53% to 81% of an organic solvent, 10% to 21% of a polymer substrate, 6% to 19% of a pore-forming agent, and 1% to 8% of a nano-functional material;
the polymer substrate is one or two selected from the group consisting of a polyvinylidene fluoride (PVDF) homopolymer and a PVDF-hexafluoropropylene (HFP) copolymer; and
the nano-functional material is one or more selected from the group consisting of Al₂O₃, SiO₂, TiO₂, and an oxide solid electrolyte;
the extractant is one or more selected from the group consisting of methanol, dichloromethane (DCM), ethanol, chloroform, trichloromethane (TCM), dichloroethane, carbon tetrachloride (CTC), toluene, and ethyl acetate;
the pore-forming agent is dibutyl phthalate (DBP) and white oil; and
in the pore-forming agent, based on a total mass of the organic solvent and the polymer substrate, a mass fraction of the DBP is in a range of 7% to 18%, and a mass fraction of the white oil is in a range of 1% to 2%.

2. The gel polymer electrolyte separator of claim 1, wherein the organic solvent is one or more selected from the group consisting of acetone, *N,N*-dimethylformamide (DMF), *N*-methylpyrrolidone (NMP), and *N,N-*dimethylacetamide (DMAC).

3. A method for preparing the gel polymer electrolyte separator of claim 1 or 2, comprising the following steps:
(1) dissolving the nano-functional material, the polymer substrate, and the pore-forming agent in the organic solvent to obtain a gel liquid; and
(2) forming the gel liquid into a film, and immersing the film in the extractant and performing extraction to obtain the gel polymer electrolyte separator.

4. The method of claim 3, wherein the method further comprises in step (1), subjecting the pore-forming agent to filtration and iron removal in sequence before the dissolving.

5. The method of claim 3, wherein the method further comprises in step (2), after the extraction, subjecting a resulting extracted film material to drying and molding to obtain the gel polymer electrolyte separator.

6. The method of claim 5, wherein the drying is conducted at a temperature of 20 °C to 100 °C.

7. Use of the gel polymer electrolyte separator of any one of claims 1 to 2 or the gel polymer electrolyte separator prepared by the method of any one of claims 3 to 6 in lithium ion batteries.

## Patentansprüche

1. Gel-Polymer-Elektrolyt-Separator, der aus Rohstoffen hergestellt wird, die ein Masterbatch und ein Extraktionsmittel umfassen; wobei
das Masterbatch die folgenden Komponenten in Massenprozent, bezogen auf die Masse des Gel-Polymer-Elektrolyten, umfasst: 53 % bis 81 % eines organischen Lösungsmittels, 10 % bis 21 % eines Polymersubstrats, 6 % bis 19 % eines Porenbildners und 1 % bis 8 % eines nanofunktionalen Materials;
das Polymersubstrat eines oder zwei, ausgewählt aus der Gruppe bestehend aus einem Polyvinylidenfluorid (PVDF)-Homopolymer und einem PVDF-Hexafluorpropylen (HFP)-Copolymer ist; und
das nanofunktionale Material eines oder mehrere, ausgewählt aus der Gruppe bestehend aus Al₂O₃, SiO₂, TiO₂ und einem oxidischen Festelektrolyten ist;
das Extraktionsmittel eines oder mehrere, ausgewählt aus der Gruppe bestehend aus Methanol, Dichlormethan (DCM), Ethanol, Chloroform, Trichlormethan (TCM), Dichlorethan, Tetrachlorkohlenstoff (CTC), Toluol und Ethylacetat ist;
der Porenbildner Dibutylphthalat (DBP) und Weißöl ist; und
im Porenbildner, bezogen auf die Gesamtmasse des organischen Lösungsmittels und des Polymersubstrats, der Massenanteil an DBP in einem Bereich von 7 % bis 18 % liegt und der Massenanteil an Weißöl in einem Bereich von 1 % bis 2 % liegt.

2. Gel-Polymer-Elektrolyt-Separator nach Anspruch 1, wobei das organische Lösungsmittel eines oder mehrere, ausgewählt aus der Gruppe bestehend aus Aceton, *N*,*N*-Dimethylformamid (DMF), *N*-Methylpyrrolidon (NMP) und *N*,*N*-Dimethylacetamid (DMAC) ist.

3. Verfahren zur Herstellung des Gel-Polymer-Elektrolyt-Separators nach Anspruch 1 oder 2, umfassend die folgenden Schritte:
(1) Auflösen des nanofunktionalen Materials, des Polymersubstrats und des Porenbildners in dem organischen Lösungsmittel, um eine Gel-Flüssigkeit zu erhalten; und
(2) Ausbilden der Gel-Flüssigkeit zu einem Film, Eintauchen des Films in das Extraktionsmittel und Durchführen einer Extraktion, um den Gel-Polymer-Elektrolyt-Separator zu erhalten.

4. Verfahren nach Anspruch 3, wobei das Verfahren in Schritt (1) ferner umfasst, den Porenbildner vor dem Auflösen nacheinander einer Filtration und einer Eisenentfernung zu unterziehen.

5. Verfahren nach Anspruch 3, wobei das Verfahren in Schritt (2) ferner umfasst, dass das resultierende extrahierte Folienmaterial nach der Extraktion einer Trocknung und Formgebung unterzogen wird, um den Gel-Polymer-Elektrolyt-Separator zu erhalten.

6. Verfahren nach Anspruch 5, wobei die Trocknung bei einer Temperatur von 20 °C bis 100 °C durchgeführt wird.

7. Verwendung des Gel-Polymer-Elektrolyt-Separators gemäß einem der Ansprüche 1 bis 2 oder des mit dem Verfahren gemäß einem der Ansprüche 3 bis 6 hergestellten Gel-Polymer-Elektrolyt-Separators in Lithium-Ionen-Batterien.

## Revendications

1. Un séparateur d'électrolyte polymère en gel, qui est préparé à partir de matières premières comprenant un mélange maître et un extractant ; dans lequel
le mélange maître comprend les composants suivants en pourcentages en poids, rapportés au poids de l'électrolyte polymère en gel : 53 % à 81 % d'un solvant organique, 10 % à 21 % d'un substrat polymère, 6 % à 19 % d'agent porogène, et 1 % à 8 % d'un matériau nanofonctionnel ;
le substrat polymère est un ou deux choisis dans le groupe constitué d'un homopolymère de polyfluorure de vinylidène (PVDF) et d'un copolymère PVDF-hexafluoropropylène (HFP) ; et
le matériau nanofonctionnel est au moins un parmi le groupe constitué de Al₂O₃, SiO₂, TiO₂, et un électrolyte solide oxyde;
l'extractant est au moins un choisi dans le groupe constitué de méthanol, dichlorométhane (DCM), éthanol, chloroforme, trichlorométhane (TCM), dichloroéthane, tétrachlorure de carbone (CTC), toluène et acétate d'éthyle ;
l'agent porogène est le phtalate de dibutyle (DBP) et une huile blanche ; et
dans l'agent porogène, rapporté à un poids total du solvant organique et du substrat polymère, une fraction en poids du DBP se situe dans la gamme de 7 % à 18 %, et une fraction en poids d'huile minérale se situe dans la gamme de 1 % à 2 %.

2. Séparateur d'électrolyte polymère en gel selon la revendication 1, dans lequel le solvant organique est au moins un choisi dans le groupe constitué de l'acétone, du *N,N-*diméthylformamide (DMF), de la *N-*méthylpyrrolidone (NMP) et du *N,N-*diméthylacétamide (DMAC).

3. Procédé de préparation du séparateur d'électrolyte polymère en gel de la revendication 1 ou 2, comprenant les étapes suivantes :
(1) dissoudre le matériau nanofonctionnel, le substrat polymère et l'agent porogène dans le solvant organique pour obtenir un gel liquide ; et
(2) mettre en forme le gel liquide en un film, immerger le film dans l'extractant et effectuer l'extraction pour obtenir le séparateur d'électrolyte polymère en gel.

4. Procédé selon la revendication 3, le procédé comprenant en outre à l'étape (1) de soumettre l'agent porogène à filtration et extraction du fer l'une après l'autre avant la dissolution.

5. Procédé selon la revendication 3, le procédé comprenant en outre à l'étape (2), après l'extraction, de soumettre un matériau en film extrait résultant à séchage et moulage pour obtenir le séparateur d'électrolyte polymère en gel.

6. Procédé selon la revendication 5, dans lequel le séchage est effectué à une température de 20 °C à 100 °C.

7. Utilisation du séparateur d'électrolyte polymère en gel de l'une quelconque des revendications 1 à 2 ou du séparateur d'électrolyte polymère en gel préparé selon l'une quelconque des revendications 3 à 6 dans des batteries lithium-ion.
